# EUROPÄISCHE PATENTSCHRIFT

(11) **EP 3 614 518 B1**
(45) Veröffentlichungstag und Bekanntmachung des Hinweises auf die Patenterteilung: **09.03.2022**
(21) Anmeldenummer: 19192289.7
(22) Anmeldetag: 19.08.2019
(51) Int. Cl.: H02J 1/10, H02J 7/00

(54) **BORDSPANNUNGSNETZ**
ON-BOARD VOLTAGE NETWORK
RÉSEAU DE BORD DE TENSION

(30) Priorität: 22.08.2018 DE 102018120430
(43) Veröffentlichungstag der Anmeldung: 26.02.2020
(73) Patentinhaber: Eberspächer Controls Landau GmbH & Co. KG, 76829 Landau (DE)
(72) Erfinder: Gärtner, Christian, 76835 Rhodt unter Rietburg (DE)
(74) Vertreter: Ruttensperger Lachnit Trossin Gomoll

(56) Entgegenhaltungen:
- DE-A1-102006 036 424
- DE-A1-102007 029 025
- DE-A1-102014 208 192

## Beschreibung

Die vorliegende Erfindung betrifft ein Bordspannungsnetz für ein Fahrzeug, umfassend einen ersten Netzbereich mit einer ersten Spannungsquelle und einer ersten Gruppe Verbraucher elektrischer Energie, einen zweiten Netzbereich mit einer zweiten Spannungsquelle und einer zweiten Gruppe Verbraucher elektrischer Energie sowie eine Trennschalteranordnung. Vermittels dieser Trennschalteranordnung können die beiden Netzbereiche wahlweise elektrisch miteinander verbunden oder voneinander entkoppelt werden.

Insbesondere in Fahrzeugen, in welchen ein autonomer Fahrbetrieb durchführbar ist, werden derartige in zwei Bereiche aufgeteilte Bordspannungsnetze mit redundanter Energieversorgung durch die beiden Spannungsquellen genutzt. In bestimmten Betriebszuständen werden diese Netzbereiche durch die Trennschalteranordnung voneinander entkoppelt, um einen sicheren Betrieb der einem jeweiligen Netzbereich zugeordneten Verbraucher elektrischer Energie gewährleisten zu können. Wird beispielsweise im ersten Netzbereich ein Fehlerzustand, wie zum Beispiel ein Kurzschluss, erkannt, wird die Trennschalteranordnung in ihren Trenn-Schaltzustand geschaltet, so dass, unabhängig von dem im ersten Netzbereich aufgetretenen Fehlerzustand, die dem zweiten Netzbereich zugeordneten Verbraucher elektrischer Energie aus der zweiten Spannungsquelle gespeist werden können. Ein derartiger Trenn-Schaltzustand kann beispielsweise auch dann herbeigeführt werden, wenn unter Bereitstellung elektrischer Energie aus dem ersten Netzbereich eine Brennkraftmaschine angelassen werden soll. Aufgrund der in diesem Zustand auftretenden hohen Belastung im ersten Netzbereich kann ein Spannungsabfall auftreten, welcher die Funktionsfähigkeit von dem zweiten Netzbereich zugeordneten Verbrauchern elektrischer Energie beeinträchtigen könnte. Auch in diesem Zustand kann es vorteilhaft sein, vorübergehend die beiden Netzbereiche voneinander zu trennen und die dem zweiten Netzbereich zugeordneten Verbraucher elektrischer Energie aus der zweiten Spannungsquelle zu speisen.

Insbesondere dann, wenn ein derartiger Trenn-Schaltzustand über eine längere Zeitdauer hinweg vorgelegen hat und in dieser Zeit die zweite Spannungsquelle durch die dem zweiten Netzbereich zugeordneten Verbraucher elektrischer Energie andauernd belastet und daher stark entladen wurde, könnte ein Schalten der Trennschalteranordnung in den Verbindungs-Schaltzustand, beispielsweise nach Beenden eines Fehlerzustandes oder allgemein eines Betriebszustandes, in welchem das Trennen der beiden Netzbereiche voneinander vorteilhaft oder erforderlich ist, aufgrund des deutlichen Unterschiedes zwischen der Spannung im ersten Netzbereich einerseits und der Spannung der zweiten Spannungsquelle andererseits zu einem übermäßig hohen Ladestrom und somit einer Überlastung des Bordspannungsnetzes führen.

Ein Bordspannungsnetz gemäß dem Oberbegriff des Anspruchs 1 ist aus der DE 10 2007 029 025 A1 bekannt.

Es ist die Aufgabe der vorliegenden Erfindung, ein Bordspannungsnetz sowie ein Verfahren zum Laden eines derartigen Bordspannungsnetzes vorzusehen, mit welchen ein das Bordspannungsnetz nicht überlastendes Aufladen einer Spannungsquelle des Bordspannungsnetzes auch bei stark entladener Spannungsquelle sichergestellt werden kann.

Erfindungsgemäß wird diese Aufgabe gemäß Anspruch 1 gelöst durch ein Bordspannungsnetz für ein Fahrzeug, umfassend:
- einen ersten Netzbereich mit einer ersten Spannungsquelle und einer ersten Gruppe Verbraucher elektrischer Energie,
- einen zweiten Netzbereich mit einer zweiten Spannungsquelle und einer zweiten Gruppe Verbraucher elektrischer Energie,
- eine Trennschalteranordnung, wobei die Trennschalteranordnung in einem ersten Anschlussbereich an den ersten Netzbereich angeschlossen ist und in einem zweiten Anschlussbereich an den zweiten Netzbereich angeschlossen ist, und wobei in einem Trenn-Schaltzustand der Trennschalteranordnung der erste Netzbereich von dem zweiten Netzbereich elektrisch entkoppelt ist und in einem Verbindungs-Schaltzustand der Trennschalteranordnung eine elektrische Verbindung zwischen dem ersten Netzbereich und dem zweiten Netzbereich hergestellt ist,

- eine Entkopplungsschalteranordnung in Zuordnung zur zweiten Spannungsquelle, wobei in einem Entkopplungs-Schaltzustand der Entkopplungsschalteranordnung die zweite Spannungsquelle vom zweiten Netzbereich entkoppelt ist und in einem Kopplungs-Schaltzustand der Entkopplungsschalteranordnung die zweite Spannungsquelle an den zweiten Netzbereich angekoppelt ist,
- einen Gleichspannungswandler, wobei im Verbindungs-Schaltzustand der Trennschalteranordnung die zweite Spannungsquelle im EntkopplungsSchaltzustand der Entkopplungsschalteranordnung durch die im zweiten Netzbereich anliegende Netzspannung vermittels des Gleichspannungswandlers aufladbar ist.

Bei einem erfindungsgemäß aufgebauten Bordspannungsnetz kann durch den Betrieb des Gleichspannungswandlers gewährleistet werden, dass ein Ladebetrieb der zweiten Spannungsquelle auch dann ohne Überlastung des Bordnetzes durchgeführt werden kann, wenn die zweite Spannungsquelle nach länger andauernder Entkopplung der beiden Netzbereiche voneinander stark entladen ist. Unabhängig von diesem Ladebetrieb kann die Entkopplungsschalteranordnung auch dazu genutzt werden, in Zuständen, in welchen im Bordspannungsnetz eine Überspannung vorliegt, beispielsweise aufgrund einer Fehlfunktion einer als Generator wirksamen Lichtmaschine oder dergleichen, die zweite Spannungsquelle vom zweiten Netzbereich zu entkoppeln, um eine Überlastung der zweiten Spannungsquelle zu vermeiden.

Ferner ist bei der vorliegenden Erfindung vorgesehen, dass ein Eingangsanschluss des Gleichspannungswandlers an den zweiten Netzbereich oder/und den zweiten Anschlussbereich der Trennschalteranordnung angeschlossen ist, und dass ein Ausgangsanschluss des Gleichspannungswandlers an einen die zweite Spannungsquelle mit der Entkopplungsschalteranordnung verbindenden Leitungsbereich angeschlossen ist. Alle für den Ladebetrieb der zweiten Spannungsquelle genutzten Systembereiche, insbesondere der Gleichspannungswandler, sind somit ausschließlich im zweiten Netzbereich aktiv bzw. dem zweiten Netzbereich zugeordnet. Keiner dieser Systembereiche, insbesondere auch der Gleichspannungswandler, stellt eine Verbindung zwischen den beiden Netzbereichen her. Dies ist aus Sicherheitsgründen besonders vorteilhaft, da somit ein Zustand, in welchem ein Defekt eines derartigen dem Ladebetrieb der zweiten Spannungsquelle zugeordneten Systembereichs zu einer ungeeigneten Kopplung der beiden Netzbereiche miteinander führen könnte, nicht auftreten kann. Aufgrund des Umstandes, dass diese Systembereiche somit hinsichtlich der definierten Entkoppelbarkeit der beiden Netzbereiche voneinander nicht sicherheitsrelevant sind, können für derartige Systembereiche, wie zum Beispiel den Gleichspannungswandler, Komponenten mit niedrigerem Sicherheitsstandard als die Trennschalteranordnung und somit deutlich kostengünstigere Komponenten eingesetzt werden.

Um im Ladebetrieb der zweiten Spannungsquelle zu gewährleisten, dass deren Spannung allmählich auf die im Bordnetz vorhandene Netzspannung von beispielsweise 12 V, 24 V oder 48 V angehoben werden kann, wird vorgeschlagen, dass ein Verhältnis einer Ausgangsspannung des Gleichspannungswandlers zu einer Eingangsspannung des Gleichspannungswandlers variierbar ist. Somit kann im Ladebetrieb die Ausgangsspannung des Gleichspannungswandlers nachgeführt bzw. allmählich angehoben werden, um bei Aufrechterhaltung eines geeigneten Ladestroms zur zweiten Spannungsquelle deren Spannung auf das Niveau der Netzspannung anzuheben.

Um den Betrieb der für den Ladebetrieb relevanten Systembereiche aufeinander abstimmen zu können, kann eine Ansteueranordnung zum Ansteuern der Trennschalteranordnung, der Entkopplungsschalteranordnung und des Gleichspannungswandlers vorgesehen sein.

Zum Bereitstellen elektrischer Energie während eines Fahrbetriebs eines mit einer Brennkraftmaschine betriebenen Fahrzeugs und auch zum Aufladen der den beiden Netzbereichen zugeordneten Spannungsquellen kann dem ersten Netzbereich eine Generatoranordnung zum Einspeisen elektrischer Energie in den ersten Netzbereich zugeordnet sein.

Die Trennschalteranordnung kann vorteilhafterweise wenigstens ein, vorzugsweise mehrere MOSFET-Schaltelemente umfasst. Auch die Entkopplungsschalteranordnung kann wenigstens ein MOSFET-Schaltelement umfassen.

Die erste Spannungsquelle kann eine Lithium-Ionen-Batterie oder eine Bleibatterie umfassen. Ferner kann die zweite Spannungsquelle eine Lithium-Ionen-Batterie oder eine Bleibatterie umfassen.

Um den Gleichspannungswandler zum Aufladen der zweiten Spannungsquelle definiert betreiben zu können, wird vorgeschlagen, dass der zweiten Spannungsquelle eine Ladezustandserfassungsanordnung zugeordnet ist. Auf der Grundlage der von dieser Ladezustandserfassungsanordnung bereitgestellten Information über den Ladezustand der zweiten Spannungsquelle, welche Information auch Information über den zur zweiten Spannungsquelle fließenden Ladestrom umfassen kann, kann die Ausgangsspannung des Gleichspannungswandlers nachgeführt werden oder bei Erreichen eines definierten Ladezustandes der zweiten Spannungsquelle der Gleichspannungswandler deaktiviert werden.

Gemäß einem weiteren Aspekt betrifft die vorliegende Erfindung ein Verfahren zum Betreiben eines erfindungsgemäß aufgebauten Bordspannungsnetzes, umfassend die Maßnahmen:
a) Schalten der Trennschalteranordnung in den Verbindungs-Schaltzustand zum Beenden einer Betriebsphase mit voneinander entkoppeltem erstem Netzbereich und zweitem Netzbereich,
b) Schalten der Entkopplungsschalteranordnung in den EntkopplungsSchaltzustand oder Belassen der Entkopplungsschalteranordnung in dem Entkoppl ungs-Schaltzustand,
c) Aktivieren des Gleichspannungswandlers zum Aufladen der zweiten Spannungsquelle.

Um beim Laden der zweiten Spannungsquelle eine Überlastung des Bordnetzes auszuschließen, kann gemäß einem vorteilhaften Aspekt bei der Maßnahme c) eine Ausgangsspannung des Gleichspannungswandlers zum Aufladen der zweiten Spannungsquelle unter einer Eingangsspannung des Gleichspannungswandlers sein. Das Anheben der Spannung der zweiten Spannungsquelle auf das im Bordnetz zur Verfügung stehende Spannungsniveau kann beispielsweise dadurch gewährleistet werden, dass bei der Maßnahme c) die Ausgangsspannung des Gleichspannungswandlers erhöht wird. Der Ladebetrieb kann dadurch beendet werden, dass bei der Maßnahme c) bei Erreichen eines vorbestimmten Deaktivierungs-Ladezustandes der zweiten Spannungsquelle der Gleichspannungswandler deaktiviert wird und die Entkopplungsschalteranordnung in den Kopplungs-Schaltzustand geschaltet wird.

Im normalen Betrieb eines Fahrzeugs wird ein Zustand, in welchem die zweite Spannungsquelle durch übermäßige Belastung stark entladen ist, nicht regelmäßig auftreten. Vorzugsweise werden daher die Maßnahmen b) und c) nur dann durchgeführt, wenn bei Durchführung der Maßnahme a) der Ladezustand der zweiten Spannungsquelle unter einem vorbestimmten Aktivierungs-Ladezustand ist. Liegt eine übermäßig starke Entladung der zweiten Spannungsquelle nicht vor, kann diese in herkömmlicher Weise über das Bordspannungsnetz geladen werden.

Um zu gewährleisten, dass auch am Beginn des Ladebetriebs ein übermäßig starker Stromfluss zur zweiten Spannungsquelle nicht auftreten kann, wird vorgeschlagen, dass die Maßnahme b) vor oder gleichzeitig mit der Maßnahme a) durchgeführt wird. Ein Zustand, in welchem bei dann geschlossener Trennschalteranordnung die stark entladene zweite Spannungsquelle direkt an den zweiten Netzbereich und somit das Bordspannungsnetz angekoppelt ist, kann somit nicht auftreten.

Um bei einem übermäßig starken Anstieg der im Bordspannungsnetz verfügbaren Netzspannung, beispielsweise aufgrund eines Defekts einer Generatoranordnung, eine Überlastung und damit eine Beschädigung der zweiten Spannungsquelle zu vermeiden, wird vorgeschlagen, dass bei in den Verbindungs-Schaltzustand geschalteter Trennschalteranordnung die Entkopplungsschalteranordnung dann in ihren Entkopplungs-Schaltzustand geschaltet wird, wenn die Spannung im zweiten Netzbereich über einer vorbestimmten Entkopplungsspannung ist.

Die Erfindung betrifft ferner ein Fahrzeug, umfassend ein erfindungsgemäß aufgebautes Bordspannungsnetz, das beispielsweise mit einem erfindungsgemäßen Verfahren betrieben werden kann.

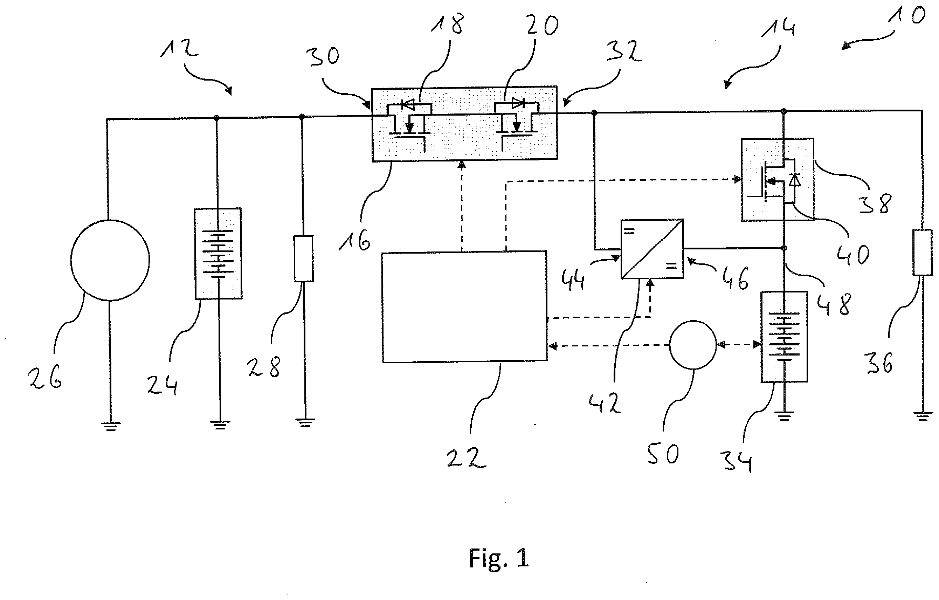

Die vorliegende Erfindung wird nachfolgend anhand der beiliegenden Fig. 1 detailliert erläutert, welche in schaltbildartiger Darstellung den Aufbau eines Bordspannungsnetzes für ein Fahrzeug darstellt.

In Fig. 1 ist ein Bordspannungsnetz für ein Fahrzeug allgemein mit 10 bezeichnet. Das Bordspannungsnetz umfasst zwei symbolhaft dargestellte Netzbereiche 12, 14, die durch eine Trennschalteranordnung 16 elektrisch miteinander gekoppelt oder voneinander entkoppelt werden können. Dabei kann die Trennschalteranordnung 16 beispielsweise mehrere MOSFET-Schaltelemente 18, 20 umfassen, die zum Umschalten der Trennschalteranordnung 16 zwischen einem Trenn-Schaltzustand, in welchem die beiden Netzbereiche 12, 14 voneinander entkoppelt sind, und einem Verbindungs-Schaltzustand, in welchem die beiden Netzbereiche 12, 14 miteinander gekoppelt sind, unter der Ansteuerung einer allgemein mit 22 bezeichneten Ansteueranordnung stehen. Dem ersten Netzbereich 12 des Bordspannungsnetzes 10 ist eine beispielsweise als Bleibatterie ausgebildete erste Spannungsquelle 24 zugeordnet. Ferner ist im ersten Netzbereich 12 eine beispielsweise in Form einer Lichtmaschine ausgebildete Generatoranordnung 26 zugeordnet, welche im Betrieb einer Brennkraftmaschine zum Einspeisen elektrischer Energie in den ersten Netzbereich 12 und über diesen das gesamte Bordspannungsnetz 10 betrieben werden kann. Ferner ist dem ersten Netzbereich 12 eine erste Gruppe 28 von Verbrauchern elektrischer Energie zugeordnet. Der erste Netzbereich 12 ist in einem ersten Anschlussbereich 30 der Trennschalteranordnung 16 an diese angekoppelt.

Dem in einem zweiten Anschlussbereich 32 der Trennschalteranordnung 16 an diese angekoppelten zweiten Netzbereich 14 ist eine beispielsweise in Form einer Lithium-Ionen-Batterie bereitgestellte zweite Spannungsquelle 34 zugeordnet. Ferner ist dem zweiten Netzbereich 14 eine zweite Gruppe 36 von Verbrauchern elektrischer Energie zugeordnet. Die in einem Fahrzeug vorgesehenen Verbraucher elektrischer Energie können beispielsweise ein elektromotorisch betriebenes Servolenksystem umfassen. Ein derartiges Servolenksystem kann mit zwei Elektromotoren aufgebaut sein. Im normalen Fahrbetrieb bei eine Grenzgeschwindigkeit überschreitender Fahrgeschwindigkeit kann ein derartiges Servolenksystem derart betrieben werden, dass nur einer der beiden Elektromotoren zum Bereitstellen einer Lenkunterstützungskraft aktiviert wird, während der andere Elektromotor inaktiv ist. Bei langsamer Fahrt oder beispielsweise zum Einparken werden zum Bereitstellen einer größeren Lenkunterstützungskraft beide Elektromotoren des Servolenksystems aktiviert. Aus Sicherheitsgründen kann dabei vorgesehen sein, dass einer dieser beiden Elektromotoren der ersten Gruppe 28 von Verbrauchern elektrischer Energie, also dem ersten Netzbereich 12 zugeordnet ist, während der andere Elektromotor des Servolenksystems der zweiten Gruppe 36 von Verbrauchern elektrischer Energie und somit dem zweiten Netzbereich 14 zugeordnet ist. Somit ist gewährleistet, dass auch bei in den Trenn-Schaltzustand geschalteter Trennschalteranordnung 16 für jeden der beiden Elektromotoren eine Spannungsquelle zur Verfügung steht. Eine ähnliche Aufteilung auf die beiden Gruppen 28, 36 von Verbrauchern elektrischer Energie kann beispielsweise auch beim Lichtsystem erfolgen. Einer der Frontscheinwerfer kann beispielsweise der ersten Gruppe 28 zugeordnet sein, während der andere Frontscheinwerfer der zweiten Gruppe 36 zugeordnet sein kann. Auf diese Art und Weise wird die Gefahr eines Ausfalls vollständiger Systeme aufgrund nicht realisierbarer Versorgung mit einer Betriebsspannung weitestgehend ausgeschlossen.

In Zuordnung zur zweiten Spannungsquelle 34 ist eine Entkopplungsschalteranordnung 38 vorgesehen. Die Entkopplungsschalteranordnung 38 kann beispielsweise ein MOSFET-Schaltelement 40 umfassen und ebenfalls unter der Ansteuerung der Ansteueranordnung 22 stehen. Bei in einen Entkopplungs-Schaltzustand geschalteter Entkopplungsschalteranordnung 38 ist die zweite Spannungsquelle 34 vom zweiten Netzbereich 14 und somit vom gesamten Bordspannungsnetz 10 entkoppelt, während bei in einen Kopplungs-Schaltzustand geschalteter Entkopplungsschalteranordnung 38 die zweite Spannungsquelle 34 an den zweiten Netzbereich 14 und somit das Bordspannungsnetz 10 angekoppelt ist. Unabhängig von einer nachfolgend noch beschriebenen Funktionalität des in Fig. 1 dargestellten Bordspannungsnetzes 10 kann beispielsweise die Entkopplungsschalteranordnung 38 dann in ihren Entkopplungs-Schaltzustand geschaltet werden, wenn im Bordspannungsnetz 10 ein Überspannungszustand vorliegt, beispielsweise aufgrund eines Defekts der Generatoranordnung 26. Beispielsweise kann bei einem Bordspannungsnetz 10 mit auf einen Wert von etwa 12 V ausgelegter Netzspannung eine Entkopplungsspannung im Bereich von 15 bis 16 V definiert werden, deren Überschreiten das Schalten der Entkopplungsschalteranordnung 38 in den Entkopplungs-Schaltzustand auslöst, um somit die zweite Spannungsquelle 34 vor einer derart hohen Netzspannung zu schützen. Die Entkopplungsschalteranordnung 38 kann beispielsweise als bidirektionaler Schalter ausgebildet sein, so dass die zweite Spannungsquelle 34 auf ein Spannungsniveau aufgeladen werden kann, das höher als die im Bordspannungsnetz 10 nominell zur Verfügung stehende Bordspannung ist. Bei Ausgestaltung der Entkopplungsschalteranordnung 38 als unidirektionaler Schalter ist eine maximale Aufladung auf die nominale Netzspannung des Bordspannungsnetzes 10 begrenzt.

Dem zweiten Netzbereich 14 ist ferner ein Gleichspannungswandler (DC-DC-Wandler) 42 zugeordnet. Ein Eingangsanschluss 44 des Gleichspannungswandlers 42 ist an den zweiten Netzbereich 14 bzw. den zweiten Anschlussbereich 32 der Trennschalteranordnung 16 angeschlossen. Ein Ausgangsanschluss 46 des Gleichspannungswandlers 42 ist an einen die zweite Spannungsquelle 34 mit der Entkopplungsschalteranordnung 38 verbindenden Leitungsbereich 48 angeschlossen. Auch der Gleichspannungswandler 42 steht unter der Ansteuerung der Ansteueranordnung 22.

Ferner ist der zweiten Spannungsquelle 34 eine Ladezustandserfassungsanordnung 50 zugeordnet. Die Ladezustandserfassungsanordnung 50 ist dazu ausgebildet, Information über den Ladezustand der zweiten Spannungsquelle 34, also beispielsweise deren Batteriespannung, in die Ansteueranordnung 22 einzuspeisen. Diese Information kann auch Information über den insbesondere vom Gleichspannungswandler 42 zur zweiten Spannungsquelle 34 fließenden Ladestrom umfassen. Auf der Grundlage dieser Information kann in nachfolgend beschriebener Art und Weise die Ansteueranordnung 22 den Betrieb des Gleichspannungswandlers 42 steuern bzw. regeln, um die zweite Spannungsquelle 34 in definierter Art und Weise aufzuladen. Dazu kann die Ansteueranordnung 22 mit Mikroprozessoren aufgebaut und mit entsprechenden Ansteuerprogrammen programmiert sein, um unter Verarbeitung der in die Ansteueranordnung eingespeisten Information die von dieser zu steuernden/regelnden Systembereiche in geeigneter Weise zu aktivieren/deaktivieren.

In einem normalen, funktionsfähigen Zustand des Bordspannungsnetzes 10 besteht grundsätzlich eine Verbindung zwischen den beiden Netzbereichen 12, 14. Das heißt, dass die Trennschalteranordnung 16 grundsätzlich in ihrem Verbindungs-Schaltzustand ist. Beispielsweise bei vorübergehender starker Belastung des ersten Netzbereichs 12 beim Anlassen einer Brennkraftmaschine kann die Trennschalteranordnung 16 in ihren Trenn-Schaltzustand geschaltet werden, um einen übermäßig starken Spannungsabfall bzw. eine übermäßige Belastung des zweiten Netzbereichs 14 zu vermeiden. Auch bei Auftreten eines Defekts, beispielsweise eines Kurzschlusses, im ersten Netzbereich 12 kann zum Gewährleisten einer Funktionsfähigkeit der dem zweiten Netzbereich 14 zugeordneten Verbraucher elektrischer Energie der zweiten Gruppe 36 die Trennschalteranordnung 16 in ihren Trenn-Schaltzustand geschaltet werden. Die der zweiten Gruppe 36 zugeordneten Verbraucher elektrischer Energie werden dann ausschließlich aus der zweiten Spannungsquelle 34 gespeist.

Da dieser Zustand längere Zeit andauern kann, beispielsweise bis der im ersten Netzbereich 12 vorhandene Defekt behoben ist, kann die zweite Spannungsquelle 34 dabei in einen Zustand starker Entladung gelangen, so dass die durch die zweite Spannungsquelle 34 bereitgestellte Batteriespannung deutlich unter die im Bordspannungsnetz 10 normalerweise zur Verfügung stehende Netzspannung absinken kann. Würde in einem derartigen Entladezustand der zweiten Spannungsquelle 34 nach Beheben des im ersten Netzbereich 12 vorhandenen Defekts oder allgemein eines Zustands, welcher das Schalten der Trennschalteranordnung 16 in ihren Trenn-Schaltzustand ausgelöst hat, die Trennschalteranordnung 16 wieder in ihren Verbindungs-Schaltzustand geschaltet werden, würde eine deutliche Spannungsdifferenz zwischen der dann auch im zweiten Netzbereich 14 wieder verfügbaren Netzspannung und der Batteriespannung der zweiten Spannungsquelle 34 auftreten. Dies würde zu einem übermäßigen Stromfluss zur zweiten Spannungsquelle 34 führen, mit der Gefahr, dass eine Überstromüberwachung ausgelöst wird bzw. das Bordnetz überlastet oder Systembereiche beschädigt werden können.

Um dies zu vermeiden, wird vor oder mit dem Schalten der Trennschalteranordnung 16 in den Verbindungs-Schaltzustand die Entkopplungsschalteranordnung 38 in ihren Entkopplungsschaltzustand geschaltet. Es ist dann die zweite Spannungsquelle 34 vom zweiten Netzbereich 14 entkoppelt. In diesem Zustand wird der Gleichspannungswandler 42 durch die Ansteueranordnung 22 aktiviert, um mit einer im Vergleich zu einer der Netzspannung im zweiten Netzbereich 14 entsprechenden Eingangsspannung am Eingangsanschluss 44 gesenkten Ausgangsspannung am Ausgangsanschluss 46 die zweite Spannungsquelle 34 zu laden. Beispielsweise kann der Gleichspannungswandler 42 derart betrieben werden, dass am Beginn des Ladebetriebs dessen Ausgangsspannung nur geringfügig über der Batteriespannung der zweiten Spannungsquelle 34 ist bzw. ein übermäßiger Stromfluss zur zweiten Spannungsquelle 34 nicht auftritt. Mit dem Fortschreiten des Ladebetriebs kann die Ausgangsspannung des Gleichspannungswandlers 42 allmählich angehoben werden, um einen ausreichenden Ladestrom über den Leitungsbereich 48 zur zweiten Spannungsquelle 34 zu gewährleisten und somit allmählich deren Batteriespannung auf die im zweiten Netzbereich 14 zur Verfügung stehende Netzspannung anzuheben. Wird durch die Ladezustandserfassungsanordnung 50 erkannt, dass die zweite Spannungsquelle 34 vollständig oder zumindest in ausreichendem Ausmaß geladen ist, kann der Gleichspannungswandler 42 deaktiviert werden und die Entkopplungsschalteranordnung 38 kann in ihren Kopplungs-Schaltzustand geschaltet werden, um die zweite Spannungsquelle 34 wieder an den zweiten Netzbereich 14 anzukoppeln, um diese somit wieder als Spannungsquelle nutzen zu können.

Mit dem im vorangehend beschriebenen Aufbau eines Bordspannungsnetzes bzw. der vorangehend beschriebenen Vorgehensweise zum Aufladen einer diesem Bordspannungsnetz zugeordneten Spannungsquelle wird es möglich, einen Ladebetrieb auch dann durchzuführen, wenn die Spannungsquelle zuvor stark entladen war, ohne dass dabei eine Überlastung des Bordnetzes oder irgendwelcher Systembereiche des Bordnetzes auftritt. Da während des Ladebetriebs die beiden Netzbereiche miteinander verbunden sind, können auch die dem zweiten Netzbereich zugeordneten Verbraucher elektrischer Energie gespeist werden. Ist ein Fahrzeug für die Durchführung eines autonomen Fahrbetriebs ausgebildet, steht ein derartiger autonomer Fahrbetrieb während dieses Ladezustands grundsätzlich nicht zur Verfügung, da für eine Redundanz in der Energieversorgung der beiden Gruppen von Verbrauchern elektrischer Energie noch nicht gesorgt ist. Erst dann, wenn auch die dem zweiten Netzbereich zugeordnete Spannungsquelle wieder geladen und an den zweiten Netzbereich angekoppelt ist, kann ein Fahrzeug wieder im autonomen Betrieb gefahren werden.

Da alle für diesen Ladebetrieb erforderlichen Systembereiche, insbesondere der Gleichspannungswandler, im zweiten Netzbereich vorgesehen bzw. dem zweiten Netzbereich zugeordnet sind, besteht nicht die Gefahr, dass ein Defekt derartiger Systembereiche zu einer ungewollten Verbindung der beiden Netzbereiche führen könnte. Dies gestattet es, beispielsweise für den Gleichspannungswandler, ebenso aber auch die Entkopplungsschalteranordnung, Komponenten mit geringerem Sicherheitsstandard zu verwenden, als dies bei der Trennschalteranordnung der Fall ist.

## Patentansprüche

1. Bordspannungsnetz für ein Fahrzeug, umfassend:
- einen ersten Netzbereich (12) mit einer ersten Spannungsquelle (24) und einer ersten Gruppe (28) Verbraucher elektrischer Energie,
- einen zweiten Netzbereich (14) mit einer zweiten Spannungsquelle (34) und einer zweiten Gruppe (36) Verbraucher elektrischer Energie,
- eine Trennschalteranordnung (16), wobei die Trennschalteranordnung (16) in einem ersten Anschlussbereich (30) an den ersten Netzbereich (12) angeschlossen ist und in einem zweiten Anschlussbereich (32) an den zweiten Netzbereich (14) angeschlossen ist, und wobei in einem Trenn-Schaltzustand der Trennschalteranordnung (16) der erste Netzbereich (12) von dem zweiten Netzbereich (14) elektrisch entkoppelt ist und in einem Verbindungs-Schaltzustand der Trennschalteranordnung (16) eine elektrische Verbindung zwischen dem ersten Netzbereich (12) und dem zweiten Netzbereich (14) hergestellt ist,
- eine Entkopplungsschalteranordnung (38) in Zuordnung zur zweiten Spannungsquelle (34), wobei in einem Entkopplungs-Schaltzustand der Entkopplungsschalteranordnung (38) die zweite Spannungsquelle (34) vom zweiten Netzbereich (14) entkoppelt ist und in einem Kopplungs-Schaltzustand der Entkopplungsschalteranordnung (38) die zweite Spannungsquelle (34) an den zweiten Netzbereich (14) angekoppelt ist,
- einen Gleichspannungswandler (42), wobei im Verbindungs-Schaltzustand der Trennschalteranordnung (16) die zweite Spannungsquelle (34) im Entkopplungs-Schaltzustand der Entkopplungsschalteranordnung (38) durch die im zweiten Netzbereich (14) anliegende Netzspannung vermittels des Gleichspannungswandlers (42) aufladbar ist, wobei ein Ausgangsanschluss (46) des Gleichspannungswandlers (42) an einen die zweite Spannungsquelle (34) mit der Entkopplungsschalteranordnung (38) verbindenden Leitungsbereich (48) angeschlossen ist,
**dadurch gekennzeichnet, dass** ein Eingangsanschluss (44) des Gleichspannungswandlers (42) an den zweiten Netzbereich (14) oder/und den zweiten Anschlussbereich (32) der Trennschalteranordnung (16) angeschlossen ist.

2. Bordspannungsnetz nach Anspruch 1, **dadurch gekennzeichnet, dass** ein Verhältnis einer Ausgangsspannung des Gleichspannungswandlers (42) zu einer Eingangsspannung des Gleichspannungswandlers (42) variierbar ist.

3. Bordspannungsnetz nach einem der vorangehenden Ansprüche, **dadurch gekennzeichnet, dass** eine Ansteueranordnung (22) zum Ansteuern der Trennschalteranordnung (16), der Entkopplungsschalteranordnung (38) und des Gleichspannungswandlers (42) vorgesehen ist.

4. Bordspannungsnetz nach einem der vorangehenden Ansprüche, **dadurch gekennzeichnet, dass** dem ersten Netzbereich (12) eine Generatoranordnung (26) zum Einspeisen elektrischer Energie in den ersten Netzbereich (12) zugeordnet ist.

5. Bordspannungsnetz nach einem der vorangehenden Ansprüche, **dadurch gekennzeichnet, dass** die Trennschalteranordnung (16) wenigstens ein MOSFET-Schaltelement (18, 20) umfasst, oder/und dass die Entkopplungsschalteranordnung (38) wenigstens ein MOSFET-Schaltelement (40) umfasst.

6. Bordspannungsnetz nach einem der vorangehenden Ansprüche, **dadurch gekennzeichnet, dass** die erste Spannungsquelle (24) eine Lithium-Ionen-Batterie oder eine Bleibatterie umfasst.

7. Bordspannungsnetz nach einem der vorangehenden Ansprüche, **dadurch gekennzeichnet, dass** die zweite Spannungsquelle (34) eine Lithium-Ionen-Batterie oder eine Bleibatterie umfasst.

8. Bordspannungsnetz nach einem der vorangehenden Ansprüche, **dadurch gekennzeichnet, dass** der zweiten Spannungsquelle (34) eine Ladezustandserfassungsanordnung (50) zugeordnet ist.

9. Verfahren zum Betreiben eines Bordspannungsnetzes (10) nach einem der vorangehenden Ansprüche, umfassend die Maßnahmen:
a) Schalten der Trennschalteranordnung (16) in den Verbindungs-Schaltzustand zum Beenden einer Betriebsphase mit voneinander entkoppeltem erstem Netzbereich (12) und zweitem Netzbereich (14),
b) Schalten der Entkopplungsschalteranordnung (38) in den EntkopplungsSchaltzustand oder Belassen der Entkopplungsschalteranordnung (38) in dem Entkopplungs-Schaltzustand,
c) Aktivieren des Gleichspannungswandlers (42) zum Aufladen der zweiten Spannungsquelle (34).

10. Verfahren nach Anspruch 9, **dadurch gekennzeichnet, dass** bei der Maßnahme c) eine Ausgangsspannung des Gleichspannungswandlers (42) zum Aufladen der zweiten Spannungsquelle (34) unter einer Eingangsspannung des Gleichspannungswandlers (42) ist, oder/und dass bei der Maßnahme c) die Ausgangsspannung des Gleichspannungswandlers (42) erhöht wird, oder/und dass bei der Maßnahme c) bei Erreichen eines vorbestimmten Deaktivierungs-Ladezustandes der zweiten Spannungsquelle (34) der Gleichspannungswandler (42) deaktiviert wird und die Entkopplungsschalteranordnung (38) in den Kopplungs-Schaltzustand geschaltet wird.

11. Verfahren nach Anspruch 9 oder 10, **dadurch gekennzeichnet, dass** die Maßnahmen b) und c) dann durchgeführt werden, wenn bei Durchführung der Maßnahme a) der Ladezustand der zweiten Spannungsquelle (34) unter einem vorbestimmten Aktivierungs-Ladezustand ist.

12. Verfahren nach einem der Ansprüche 9-11, **dadurch gekennzeichnet, dass** die Maßnahme b) vor oder gleichzeitig mit der Maßnahme a) durchgeführt wird.

13. Verfahren nach einem der Ansprüche 9-12, **dadurch gekennzeichnet, dass** bei in den Verbindungs-Schaltzustand geschalteter Trennschalteranordnung (16) die Entkopplungsschalteranordnung (38) dann in ihren EntkopplungsSchaltzustand geschaltet wird, wenn die Spannung im zweiten Netzbereich (14) über einer vorbestimmten Entkopplungsspannung ist.

14. Fahrzeug, umfassend ein Bordspannungsnetz nach einem der Ansprüche 1-8, vorzugsweise betrieben mit einem Verfahren nach einem der Ansprüche 9-13.

## Claims

1. On-board power system for a vehicle comprising:
- a first system zone (12) with a first voltage source (24) and a first group (28) of electrical energy consumers,
- a second system zone (14) with a second voltage source (34) and a second group (36) of electrical energy consumers,
- a disconnector arrangement (16), wherein the disconnector arrangement (16) is connected in a first connection area (30) to the first system zone (12) and is connected in a second connection area (32) to the second system zone (14), and wherein in a disconnection switching state of the disconnector arrangement (16) the first system zone (12) is electrically decoupled from the second system zone (14) and in a connection switching state of the disconnector arrangement (16) an electrical connection is established between the first system zone (12) and the second system zone (14),
- a decoupling switch arrangement (38) in association with the second voltage source (34), wherein in a decoupling switching state of the decoupling switch arrangement (38) the second voltage source (34) is decoupled from the second system zone (14) and in a coupling switching state of the decoupling switch arrangement (38) the second voltage source (34) is coupled to the second system zone (14),
- a DC-DC converter (42), wherein, in the connection switching state of the disconnector arrangement (16), the second voltage source (34) can be charged by means of the DC-DC converter (42) in the decoupling switching state of the decoupling switch arrangement (38) by means of the system voltage present in the second system zone (14), wherein an output connection (46) of the DC-DC converter (42) is connected to a line section (48) connecting the second voltage source (34) to the decoupling switch arrangement (38).
**characterized in that** an input connection (44) of the DC-DC converter (42) is connected to the second system zone (14) or/and the second connection area (32) of the decoupling switch arrangement (16),

2. On-board power system according to claim 1, **characterized in that** a ratio of an output voltage of the DC-DC converter (42) to an input voltage of the DC-DC converter (42) can be varied.

3. On-board power system according to any one of the preceding claims, **characterized in that** a control arrangement (22) is provided for controlling the disconnector arrangement (16), the decoupling switch arrangement (38) and the DC-DC converter (42).

4. On-board power system according to one of the preceding claims, **characterized in that** a generator arrangement (26) for feeding electrical energy into the first system zone (12) is assigned to the first system zone (12).

5. On-board power system according to one of the preceding claims, **characterized in that** the disconnector arrangement (16) comprises at least one MOSFET switching element (18, 20), or/and **in that** the decoupling switch arrangement (38) comprises at least one MOSFET switching element (40).

6. On-board power system according to one of the preceding claims, **characterized in that** the first voltage source (24) comprises a lithium-ion battery or a lead-acid battery.

7. On-board power system according to any one of the preceding claims, **characterized in that** the second voltage source (34) comprises a lithium-ion battery or a lead-acid battery.

8. On-board power system according to any one of the preceding claims, **characterized in that** a state of charge detection arrangement (50) is associated with the second voltage source (34).

9. Method for operating an on-board power system (10) according to one of the preceding claims, comprising the following measures:
a) switching the disconnector arrangement (16) to the connection switching state to terminate an operating phase with the first system zone (12) and the second system zone (14) decoupled from each other,
b) switching the decoupling switch arrangement (38) into the decoupling switching state or leaving the decoupling switch arrangement (38) in the decoupling switching state,
c) activating the DC-DC converter (42) to charge the second voltage source (34).

10. Method according to claim 9, **characterized in that** in measure c) an output voltage of the DC-DC converter (42) for charging the second voltage source (34) is below an input voltage of the DC-DC converter (42), or/and that in measure c) the output voltage of the DC-DC converter (42) is increased, or/and **in that**, in measure c), when a predetermined deactivation charge state of the second voltage source (34) is reached, the DC-DC converter (42) is deactivated and the decoupling switch arrangement (38) is switched into the coupling switching state.

11. Method according to claim 9 or 10, **characterized in that** the measures b) and c) are realized if, when the measure a) is performed, the state of charge of the second voltage source (34) is below a predetermined activation state of charge.

12. Method according to any one of claims 9-11, **characterized in that** measure b) is realized before or simultaneously with measure a).

13. Method according to any one of claims 9-12, **characterized in that**, with the disconnector arrangement (16) switched to the connection switching state, the decoupling switch arrangement (38) is switched to its decoupling switching state when the voltage in the second system zone (14) is above a predetermined decoupling voltage.

14. Vehicle comprising an on-board power system according to any one of claims 1-8, preferably operated by a method according to any one of claims 9-13.

## Revendications

1. Réseau électrique de bord pour un véhicule, comprenant :
- une première zone de réseau (12) avec une première source de tension (24) et un premier groupe (28) de consommateurs d'énergie électrique,
- une deuxième zone de réseau (14) avec une deuxième source de tension (34) et un deuxième groupe (36) de consommateurs d'énergie électrique,
- un agencement de disjoncteur (16), dans lequel l'agencement de disjoncteur (16) est raccordé dans une première zone de raccordement (30) à la première zone de réseau (12) et est raccordé dans une deuxième zone de raccordement (32) à la deuxième zone de réseau (14), et dans lequel dans un état de commutation de disjonction de l'agencement de disjoncteur (16), la première zone de réseau (12) est découplée électriquement de la deuxième zone de réseau (14) et dans un état de commutation de connexion de l'agencement de disjoncteur (16), une connexion électrique est établie entre la première zone de réseau (12) et la deuxième zone de réseau (14),
- un agencement de commutation de découplage (38) associé à la deuxième source de tension (34), dans lequel dans un état de commutation de découplage de l'agencement de commutation de découplage (38) la deuxième source de tension (34) est découplée de la deuxième zone de réseau (14) et dans un état de commutation de couplage de l'agencement de commutation de découplage (38) la deuxième source de tension (34) est couplée à la deuxième zone de réseau (14),
- un convertisseur DC (42), dans lequel dans l'état de commutation de connexion de l'agencement de disjoncteur (16) la deuxième source de tension (34) peut dans l'état de commutation de découplage de l'agencement de commutation de découplage (38) être chargée par la tension de réseau appliquée dans la deuxième zone de réseau (14) au moyen du convertisseur DC (42), dans lequel une borne de sortie (46) du convertisseur DC (42) est raccordée à une zone de ligne (48) reliant la deuxième source de tension (34) au dispositif de commutation de découplage (38),
**caractérisé en ce qu'**une borne d'entrée (44) du convertisseur DC (42) est raccordée à la deuxième zone de réseau (14) ou/et à la deuxième zone de raccordement (32) de l'agencement de disjoncteur (16).

2. Réseau électrique de bord selon la revendication 1, **caractérisé en ce qu'**un rapport entre une tension de sortie du convertisseur DC (42) et une tension d'entrée du convertisseur DC (42) est variable.

3. Réseau électrique de bord selon l'une des revendications précédentes, **caractérisé en ce qu'**il est prévu un agencement de commande (22) pour commander l'agencement de disjoncteur (16), l'agencement de commutation de découplage (38) et le convertisseur DC (42).

4. Réseau électrique de bord selon l'une des revendications précédentes, **caractérisé en ce qu'**un agencement de générateur (26) est associé à la première zone de réseau (12) pour introduire de l'énergie électrique dans la première zone de réseau (12).

5. Réseau électrique de bord selon l'une des revendications précédentes, **caractérisé en ce que** l'agencement de disjoncteur (16) comprend au moins un élément de commutation MOSFET (18, 20), ou/et **en ce que** l'agencement de commutation de découplage (38) comprend au moins un élément de commutation MOSFET (40).

6. Réseau électrique de bord selon l'une des revendications précédentes, **caractérisé en ce que** la première source de tension (24) comprend une batterie au lithium-ion ou une batterie au plomb.

7. Réseau électrique de bord selon l'une des revendications précédentes, **caractérisé en ce que** la deuxième source de tension (34) comprend une batterie au lithium-ion ou une batterie au plomb.

8. Réseau électrique de bord selon l'une des revendications précédentes, **caractérisé en ce qu'**un agencement de détection d'état de charge (50) est associé à la deuxième source de tension (34).

9. Procédé d'exploitation d'un réseau électrique de bord (10) selon l'une des revendications précédentes, comprenant les mesures suivantes :
a) commutation de l'agencement de disjoncteur (16) dans l'état de commutation de connexion pour mettre fin à une phase de fonctionnement avec une première zone de réseau (12) et une deuxième zone de réseau (14) découplées l'une de l'autre,
b) commutation de l'agencement de commutation de découplage (38) dans l'état de commutation de découplage ou laisser l'agencement de commutation de découplage (38) dans l'état de commutation de découplage,
c) activer le convertisseur DC (42) pour charger la deuxième source de tension (34).

10. Procédé selon la revendication 9, **caractérisé en ce que** lors de la mesure c), une tension de sortie du convertisseur DC (42) pour charger la deuxième source de tension (34) est inférieure à une tension d'entrée du convertisseur DC (42), ou/et **en ce que** lors de la mesure c), la tension de sortie du convertisseur DC (42) est augmentée, ou/et **en ce que**, lors de la mesure c), lorsqu'un état de charge de désactivation prédéterminé de la deuxième source de tension (34) est atteint, le convertisseur DC (42) est désactivé et l'agencement de commutation de découplage (38) est commuté dans l'état de commutation de couplage.

11. Procédé selon la revendication 9 ou 10, **caractérisé en ce que** les mesures b) et c) sont réalisées lorsque, lors de la réalisation de la mesure a), l'état de charge de la deuxième source de tension (34) est inférieur à un état de charge d'activation prédéterminé.

12. Procédé selon l'une des revendications 9-11, **caractérisé en ce que** la mesure b) est réalisée avant ou en même temps que la mesure a).

13. Procédé selon l'une quelconque des revendications 9 à 12, **caractérisé en ce que**, lorsque l'agencement de disjoncteur (16) est commuté dans l'état de connexion, l'agencement de disjoncteur de découplage (38) est commuté dans son état de commutation de découplage lorsque la tension dans la deuxième zone du réseau (14) est supérieure à une tension de découplage prédéterminée.

14. Véhicule comprenant un réseau électrique de bord selon l'une des revendications 1 à 8, de préférence opéré par un procédé selon l'une des revendications 9 à 13.
